Europäisches Patentamt

European Patent Office

Office européen des brevets

(19)

(11) Numéro de publication: **0 240 644**
**B1**

## FASCICULE DE BREVET EUROPEEN

(45) Date de publication du fascicule du brevet:
05.09.90

(51) Int. Cl.⁵: **H02K 5/24**, H02K 1/18

(21) Numéro de dépôt: 86402571.3

(22) Date de dépôt: 20.11.86

(54) Machine dynamo-électrique notamment alternateur de véhicule automobile.

(30) Priorité: 08.04.86 FR 8604989

(43) Date de publication de la demande:
14.10.87 Bulletin 87/42

(45) Mention de la délivrance du brevet:
05.09.90 Bulletin 90/36

(84) Etats contractants désignés:
DE ES GB IT

(56) Documents cités:
DE-A- 2 811 283
DE-A- 2 830 883
FR-A- 2 409 626
US-A- 3 546 504

(73) Titulaire: VALEO EQUIPEMENTS ELECTRIQUES
MOTEUR, 2 Rue Andre Boulle, F-94000 Creteil(FR)

(72) Inventeur: Vogelsberger, Marcel, 5, Place Leamington,
F-92330 Sceaux(FR)
Inventeur: Fouchereau, Gabriel, Chemin de
Toucheronde, F-49320 St-Melaine-Aubance(FR)

(74) Mandataire: Gamonal, Didier, Société VALEO Service
Propriété Industrielle 30, rue Blanqui, F-93406 Saint
Ouen(FR)

ACTORUM AG

## Description

L'invention concerne une machine dynamo-électrique et plus particulièrement un alternateur de véhicule automobile du type comportant un rotor comprenant deux roues polaires, en regard l'une de l'autre, disposées sur l'arbre du rotor de part et d'autre d'un noyau monté sur ledit arbre et sur lequel est disposé coaxialement un enroulement inducteur et un stator constitué d'un paquet de tôles assemblées rigidement les unes aux autres dans l'alésage duquel tourne le rotor tourillonnant lui-même dans les paliers de deux flasques d'extrémité dans le prolongement formant manchon de recouvrement de l'un au moins desquels est logé ledit stator contre lequel sont fixés les flasques d'extrémité au moyen de tirants.

Dans ce type de machine dynamo-électrique, la modulation des forces électromagnétiques qui s'exercent dans l'entrefer sont la cause principale des vibrations qui se propagent des enroulements de phase au stator puis dudit stator aux flasques d'extrémités avant et arrière qui le maintiennent entre eux.

Les bruits, d'origine magnétique, qui en résultent, sont ainsi émis, soit directement par le stator, à travers les ouvertures de ventilation du flasque avant soit par l'enveloppe extérieure de l'alternateur constituée des flasques avant et arrière en contact direct avec ledit 25 stator.

La présente invention a pour but de remédier à ces inconvénients en d'une part isolant le stator de son enveloppe extérieure et d'autre part en amortissant les vibrations du stator lui-même. Ces deux actions ont pour effet, respectivement d'éviter le rayonnement sonore de l'enveloppe extérieure de l'alternateur et de réduire l'émission du bruit à travers les ouvertures de ventilation du flasque avant.

Pour résoudre ce problème, on a déjà proposé comme dans la demande de brevet DE-A 2 811 283 de placer sur la périphérie du stator, une pluralité d'entretoises formée de pièces métalliques recouvertes sur au moins l'une de leurs faces de matériau élastique, lesdites entretoises étant fixées au flasque support et coopérant avec des encoches ménagées sur le pourtour du stator. Une telle solution présente l'inconvénient de nécessiter plusieurs entretoises identiques réparties sur la périphérie du stator, ce qui augmente le coût de l'ensemble de manière d'autant plus importante que lesdites entretoises sont de forme complexe et nécessitent des moyens de fixation qui leur sont propres.

Le brevet US-A 3 546 504 propose d'insérer entre le stator et le flasque support une couche de matériau élastique ayant des propriétés d'amortissement. si cette solution présente l'avantage de ne pas nécessiter de découpe particulière des tôles du stator, elle présente l'inconvénient de ne présenter, lors de la fixation du stator, aucune possibilité de réglage, en particulier de l'entrefer entre stator et rotor.

La présente invention résout ces problèmes et concerne à cet effet une machine dynamo-électrique et plus particulièrement un alternateur de véhicule automobile du type comportant un rotor et un stator constitué d'une paquet de tôles assemblées rigidement les unes sur les autres, dans l'alésage duquel tourne le rotor tourillonnant lui-même dans les paliers de deux flasques d'extrémité et dans le prolongement formant manchon de recouvrement dans l'un au moins desquels est logé ledit stator contre lequel sont fixés les flasques d'exrémité et au moyen des tirants, et qui est lui-même fixé dans le manchon de recouvrement de l'un des flasques d'extrémité par l'intermédiaire d'une entretoise en matériau amortissant, tel que caoutchouc ou matière plastique, insérée entre ledit manchon et le pourtour du stator en chevauchant tout ou en partie ledit stator, caractérisé en ce que l'entretoise en matériau amortissant est constituée par deux rondelles épaulées qui coiffent respectivement les deux faces d'extrémité périphériques du stator.

Dans un autre mode de réalisation, l'entretoise est constituée d'une pluralité de tampons disposés longitudinalement sur le pourtour du stator.

L'invention sera mieux comprise à l'aide des dessins annexés sur lesquels :

- La figure 1 représente une vue en coupe longitudinale de la machine dynamo-électrique conforme à l'invention et plus particulièrement un alternateur de véhicule automobile.

- Les figures 2 et 3 représentent respectivement en perspective et en coupe transversale l'entretoise et son montage dans l'alternateur selon un autre mode de réalisation de l'invention.

- La figure 4 représente une vue partielle à plus grande échelle de la figure 1 montrant plus particulièrement les conduits de ventilation alliés à l'entretoise réalisée selon la figure 1.

La figure 5 représente une vue partielle en perspective et à plus grande échelle d'un anneau de renfort devant coopérer avec l'entretoise pour la fixation du stator selon un mode de réalisation particulier de l'invention.

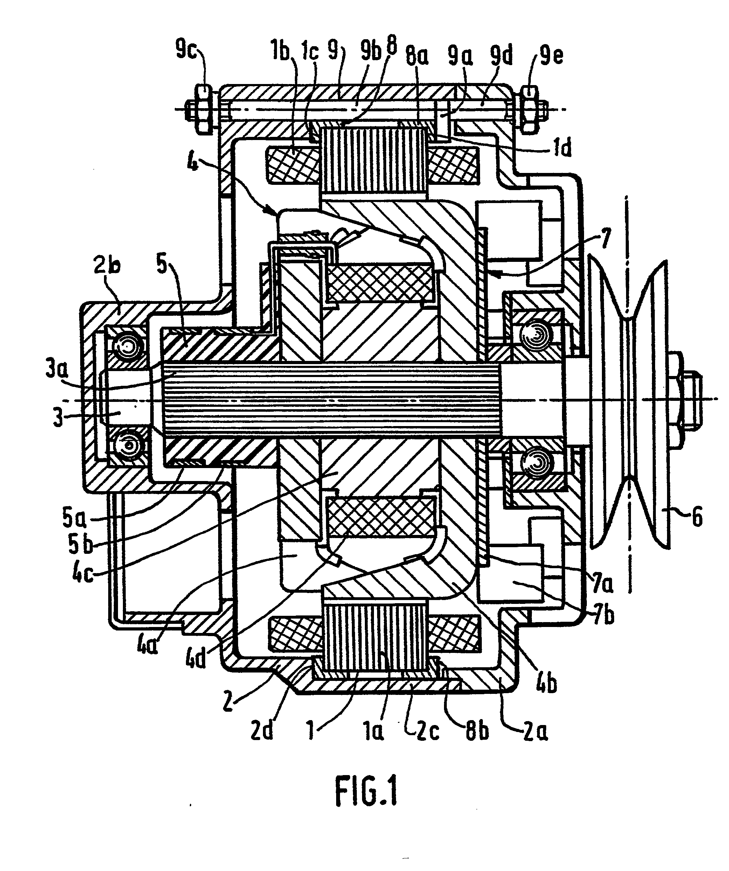

Selon un mode préféré de réalisation de l'invention la machine dynamo-électrique ci-dessous décrit, concerne plus particulièrement un alternateur de véhicule automobile représenté à la figure 1 et comportant un stator 1 constitué de manière connue d'un paquet de tôles 1a et d'enroulements de phase 1b, le stator étant maintenu en position entre deux flasques d'extrémité 2 et 2a dans les paliers 2b desquels tourillonnent les extrémités d'un arbre 3 portant le rotor 4 constitué de deux éléments polaires à griffes 4a et 4b emprisonnant un noyau central 4c sur lequel est placée une bobine inductrice 4d connectée à des bagues collectrices 5a et 5b serties sur un support en matière isolante 5, bagues collectrices 5a et 5b sur lesquelles frottent des balais (non représentés) l'ensemble rotor 4 et 5 est emmanché à force sur l'arbre 3 et maintenu en rotation grâce à des cannelures 3a ménagées sur l'arbre 3. Cet arbre 3 est entraîné par un moteur à combustion interne par l'intermédiaire d'une poulie 6. Un ventilateur 7 constitué d'un disque 7a et de pales 7b est fixé à la pièce polaire 4b du rotor 4.

Selon un mode de réalisation particulier de ce type d'alternateur le paquet de tôles 1a du stator 1 est logé à l'intérieur du manchon de recouvrement 2c prolongeant le flasque d'extrémité 2a en prenant appui sur une face frontale 2d au fond du manchon 2c.

Conformément à l'invention le stator 1 est fixé dans le manchon de recouvrement 2c de l'un des flasques d'extrémité par l'intermédiaire d'une entretoise en matériau amortissant insérée entre ledit manchon et le pourtour du stator en chevauchant tout ou en partie ledit stator.

Selon un premier mode de réalisation représenté par la figure 1 l'entretoise en matériau amortissant est constituée par deux rondelles épaulées 8 et 8a qui coiffent respectivement les deux faces d'extrémité périphériques 1c et 1d du stator 1 qui vient en appui sur la face frontale 2d du manchon de recouvrement 2c par l'intermédiaire de la rondelle 8 et se trouve immobilisé par les tirants 9. Les tirants comportent à cet effet un bourrelet 9a ménagé de matière à une longueur déterminée d'une des extrémités 9b de ceux-ci de manière à prendre appui sur la face d'extrémité périphérique 8b de la rondelle amortissante 8a. L'immobilisation est provoquée par le vissage de l'écrou 9c à l'extrémité filetée de la tige 9b des tirants servant ultérieurement à la fixation du flasque d'extrémité 2a par l'intermédiaire d'écrous 9e dont le vissage presse et maintient ledit flasque d'extrémité 2a en appui contre le manchon de recouvrement 2c dans lequel il se centre.

Selon un autre mode de réalisation l'entretoise composée des rondelles amortissantes 8 et 8a peut être surmoulée sur le pourtour du stator 1.

Comme décrit ci-dessus le stator 1 se trouve fixé d'une manière légèrement élastique dans son flasque d'extrémité support 2 contre la face frontale 2d faisant office de butée.

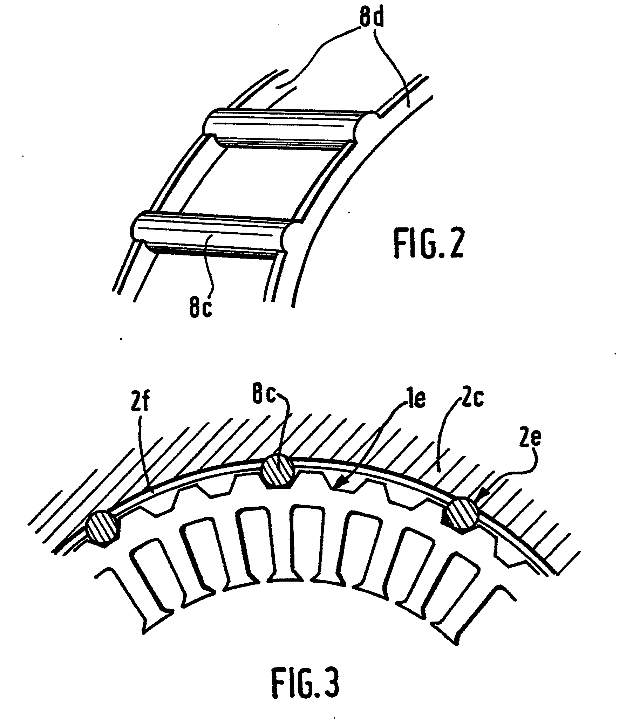

Selon un deuxième mode de réalisation représenté sur les figures 2 et 3 l'entretoise amortissante est constituée d'une pluralité de tampons cylindriques 8c disposés longitudinalement sur le pourtour du stator 1. Lesdits tampons se trouvent coincés entre la face interne du manchon de recouvrement 2c et le paquet de tôles 1a pourvu de créneaux longitudinaux 1e obtenus lors du découpage des tôles, lesdits créneaux pouvant avantageusement recevoir les tampons 8c.

Les tampons cylindriques 8c peuvent être avantageusement reliés par leurs extrémités respectivement à deux rondelles 8d en appui sur les faces d'extrémité périphériques du stator.

Le manchon de recouvrement 2c du flasque d'extrémité 2 est doté intérieurement de canaux longitudinaux 2e judicieusement ménagés en vis-à-vis des créneaux 1e du paquet de tôles 1a et dans lesquels sont susceptibles de se loger les tampons 8c.

Les rondelles 8d relient les tampons 8c par la moitié inférieure de leurs extrémités afin de permettre lors du montage de créer des conduits de ventilation 2f.

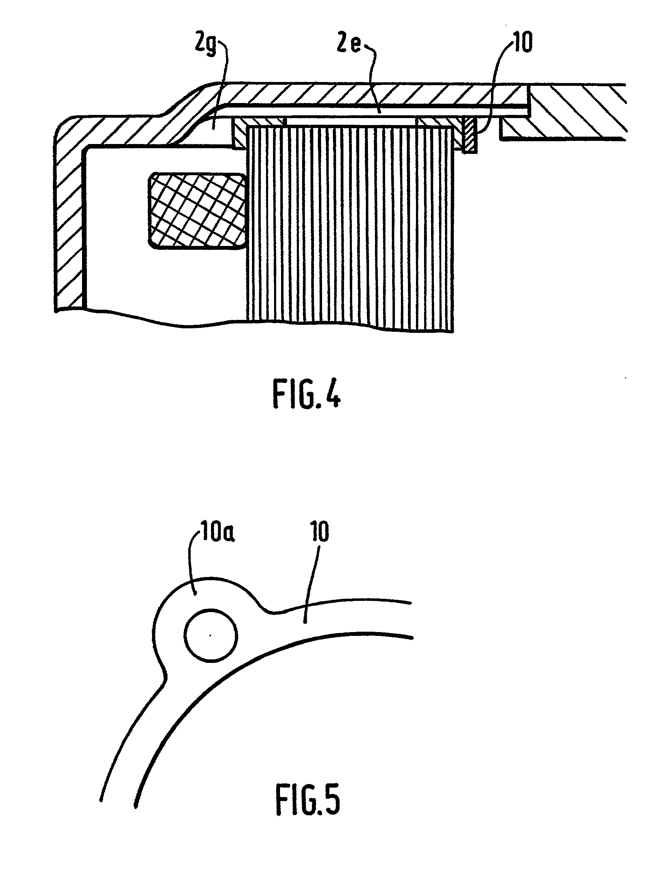

Selon un autre mode de réalisation représenté par les figures 4 et 5 les canaux longitudinaux internes 2e peuvent déboucher dans des logements correspondants 2g ménagés à partir de la face frontale 2d du flasque d'extrémité 2 pour constituer des conduits de ventilation.

Afin d'éviter un écrasement mécanique de la face frontale de l'entretoise amortissante et conséquemment la déformation de celle-ci, il est judicieux d'y accoler un anneau de renfort 10 en acier sur lequel prennent appui les bourrelets 9a des tirants 9.

De ce fait l'anneau de renfort 10 comporte de matière des oreilles 10a ménagées radialement sur son pourtour et dans les orifices desquels traversent les tiges 9b des tirants 9 lors du montage du stator dans le flasque d'extrémité.

Il est également évident que l'invention peut être appliquée à tout type d'alternateur connu par exemple aux alternateurs ayant un rotor comprenant des aimants permanents.

**Revendications**

1. Machine dynamo-électrique et plus particulièrement un alternateur de véhicule automobile du type comportant un rotor (4) et un stator (1) constitué d'un paquet de tôles assemblées rigidement les unes sur les autres, dans l'alésage duquel tourne le rotor tourillonnant lui-même dans les paliers de deux flasques d'extrémité (2) et (2a) dans le prolongement formant manchon de recouvrement (2c) dans l'un au moins desquels (2) est logé ledit stator (1) contre lequel sont fixés les flasques d'extrémité (2) et (2a) au moyen des tirants (9), et qui est lui-même fixé dans le manchon de recouvrement (2c) de l'un des flasques d'extrémité (2) par l'intermédiaire d'une entretoise (8) en matériau amortissant, tel que caoutchouc ou matière plastique, insérée entre ledit manchon (2c) et le pourtour du stator en chevauchant tout ou en partie ledit stator (1), caractérisée en ce que l'entretoise (8) en matériau amortissant est constituée par deux rondelles épaulées (8 et 8a) qui coiffent respectivement les deux faces d'extrémité périphériques du stator (1).

2. Machine dynamo-électrique selon la revendication 1, caractérisée en ce que l'entretoise (8) est surmoulée sur le pourtour du stator (1).

3. Machine dynamo-électrique selon la revendication 1, caractérisée en ce que l'entretoise (8) est constituée d'une pluralité de tampons (8c) disposés longitudinalement sur le pourtour du stator (1), et qui sont reliés par leurs extrémités respectivement à deux rondelles (8d) en appui sur les faces d'extrémité périphériques (8b) du stator (1).

4. Machine dynamo-électrique selon la revendication 3, caractérisée en ce que les tampons (8c) se logent avantageusement dans des canaux longitudinaux (2e) correspondants ménagés respectivement sur le pourtour du stator (1) et dans le manchon de recouvrement (2c).

5. Machine dynamo-électrique selon l'une quelconque des revendications 1 et 3, caractérisée en ce que sur l'une au moins des faces d'extrémité de l'entretoise (8), prend appui un anneau de renfort (10) en matériau d'une dureté au moins égale à celui des flasques d'extrémité (2) et (2a).

6. Machine dynamo-électrique selon la revendication 5, caractérisée en ce que des oreilles (10a) sont ménagées radialement de matière sur le pourtour de l'anneau de renfort (10) dont le nombre est égal au nombre de tirants de fixation (9) du stator (1), qui les traversent.

## Claims

1. A dynamo-electric machine, and more particularly an alternator for an automotive vehicle, of the kind comprising a rotor (4) and a stator (1) comprising a stack of laminations assembled rigidly together, in the bore of which the rotor rotates, the rotor being itself rotatably mounted in the bearings of two end plates (2) and (2a), the said stator (1) being mounted in the extension constituting a housing sleeve (2c) of at least one of the said end plates (2), the end plates (2) and (2a) being secured by means of tie bolts (9) against the said stator (1), the stator being itself secured within the housing sleeve (2c) of one of the end plates (2) by means of a spacer (8) of shock absorbing material, for example rubber or plastics material, inserted between the said sleeve (2c) and the outer periphery of the stator, so as to straddle all or part of the said stator (1), characterised in that the spacer (8) of shock absorbing material comprises two shouldered rings (8 and 8a) which cover respectively the two peripheral end faces of the stator (1).

2. A dynamo-electric machine according to Claim 1, characterised in that the spacer (8) is moulded onto the outer periphery of the stator (1).

3. A dynamo-electric machine according to Claim 1, characterised in that the spacer (8) comprises a plurality of bars (8c), which are disposed longitudinally on the outer periphery of the stator (1) and which are connected through their respective ends to two rings (8d) which are in engagement on the peripheral end faces (8b) of the stator (1).

4. A dynamo-electric machine according to Claim 3, characterised in that the bars (8c) lie advantageously in corresponding longitudinal grooves (2e) which are formed respectively on the outer periphery of the stator (1) and in the housing sleeve (2c).

5. A dynamo-electric machine according to either one of Claims 1 and 3, characterised in that a reinforcing ring (10), of a material having a hardness at least equal to that of the end plates (2) and (2a), is in abutment on at least one of the end faces of the spacer (8).

6. A dynamo-electric machine according to Claim 5, characterised in that ears (10a) are formed radially and integrally on the outer periphery of the reinforcing ring (10), the number of said ears being equal to the number of tie bolts (9) securing the stator (1), which extend through the ears.

## Patentansprüche

1. Dynamoelektrische Maschine, insbesondere Wechselstromgenerator für ein Kraftfahrzeug, von der Art, die einen Rotor (4) und einen Stator (1) enthält, bestehend aus einem Paket starr miteinander verbundener Bleche, in dessen Bohrung sich der Rotor dreht, der wiederum in den Lagern von zwei Endflanschen (2) und (2a) in der eine Abdeckmuffe (2c) bildenden Verlängerung rotiert, wobei wenigstens in einem der Flansche (2) der genannte Stator (1) angeordnet ist, woran die Endflansche (2) und (2a) mit Hilfe von Zugelementen (9) befestigt sind und der selbst in der Abdeckmuffe (2c) des einen Endflanschs (2) mittels eines Zwischenstücks (8) aus dämpfendem Material, wie z.B. Kautschuk oder Kunststoff, befestigt ist, welches zwischen der genannten Muffe (2c) und dem Kreisumfang des Stators eingesetzt ist und den genannten Stator (1) ganz oder teilweise überlappt, dadurch gekennzeichnet, daß das aus dämpfendem Material bestehende Zwischenstück (8) zwei Schulterscheiben (8 und 8a) umfaßt, die die beiden peripheren Endflächen des Stators (1) überdecken.

2. Dynamoelektrische Maschine nach Anspruch 1, dadurch gekennzeichnet, daß das Zwischenstück (8) dem äußeren Umfang des Stators (1) überformt ist.

3. Dynamoelektrische Maschine nach Anspruch 1 dadurch gekennzeichnet, daß das Zwischenstück (8) aus einer Vielzahl von Puffern (8c) besteht, die in Längsrichtung am äußeren Umfang des Stators (1) angeordnet sind und die an ihren Enden jeweils mit zwei Scheiben (8d) verbunden sind, welche auf den Umfangsendflächen (8b) des Stators (1) aufliegen.

4. Dynamoelektrische Maschine nach Anspruch 3, dadurch gekennzeichnet, daß die Puffer (8c) vorteilhaft in entsprechenden länglichen Kanälen (2e) angeordnet sind, die sich am äußeren Umfang des Stators (1) bzw. in der Abdeckmuffe (2c) befinden.

5. Dynamoelektrische Maschine nach einem der Ansprüche 1 und 3, dadurch gekennzeichnet, daß auf wenigstens einer der Endflächen des Zwischenstücks (8) ein Verstärkungsring (10) aus einem Werkstoff aufliegt, dessen Härte wenigstens derjenigen der Endflansche (2) und (2a) entspricht.

6. Dynamoelektrische Maschine nach Anspruch 5, dadurch gekennzeichnet, daß in einem Stück mit dem äußeren Umfang des Verstärkungsrings (10) radial Ösen angebracht sind, deren Anzahl der Zahl der Zugelemente (9) des Stators (1), die quer hindurch verlaufen, entspricht.

FIG.1

FIG.2

FIG.3

FIG.4

FIG.5